# EUROPEAN PATENT SPECIFICATION

(11) **EP 2 752 585 B1**
(45) Date of publication and mention of the grant of the patent: **27.05.2015**
(21) Application number: 13150332.8
(22) Date of filing: 04.01.2013
(51) Int. Cl.: F15B 19/00

(54) **Control unit for a valve actuator**
Steuereinheit für Ventilaktuator
Unité de commande pour actionneur de soupape

(43) Date of publication of application: 09.07.2014
(73) Proprietor: Alfa Laval Corporate AB, 221 00 Lund (SE)
(72) Inventor: Andersen, Jens Folkmar, 7000 Fredericia (DK); Madsen, Karsten Schack, 5000 Oodense C (DK); Rehhoff, Kenneth, 5000 Odense C (DK); Henriksen, Axel, 5000 Odense C (DK)
(74) Representative: Alfa Laval Attorneys

(56) References cited:
- US-A- 5 272 647
- US-A1- 2006 031 001
- US-A1- 2012 065 785

## Description

### Technical Field

The invention relates to a control unit for a valve actuator and, more particularly, to various components of the control unit and how signals are initiated by a processing unit that is comprised in the control unit.

### Background Art

Today several different types of valves exist and are employed in various applications depending on their type. Some type of valve are the seat valve, which includes e.g. both single seat valves and double seat valves, the membrane valve, the butterfly valve etc.

The seat valve is typically controlled by an actuator that opens and closes the valve by moving a valve disc away from a valve seat respectively in contact with the valve seat. When the valve disc abuts the valve seat, i.e. when the valve disc is brought into contact with the valve seat, then the seat valve is closed. When the valve disk is not in contact with the valve seat then the valve is open. The actuator has a spring that via an actuator piston, a piston rod and a valve stem exerts a force on the valve disc such that it is brought into contact with the valve seat, which effectively closes the valve. The valve is opened by applying a pressure on the actuator piston, such that a force that counteracts the force exerted by the spring is generated. The valve opens when the force generated by the pressure overcomes the force applied by the spring. The valve remains open as long as the applied pressure is sufficiently high to generate the force that overcomes the force applied by the spring.

When a pressure is applied in the actuator to such an extent that the valve is opened the actuator is said to be "pressurized" or "activated". When no pressure is applied or the pressure is so low that the valve is closed, the actuator is said to be "de-pressurized" or "de-activated". Actuators that apply this activation and de-activation for opening respectively closing a seat valve are commonly used in many industries and have been described in a number of patent documents, such as in WO9724541. The actuators are generally referred to as "normally closed" actuators, which means that the actuator must be pressurized or activated for counteracting the spring such that the valve is opened. A "normally opened" actuator must be pressurized or activated for counteracting the spring such that the valve is closed. In other aspects normally opened actuators and normally closed actuators generally share the same properties.

Other types of valves, such as butterfly valves and membrane valves, are often operated by a similar actuator that may be "pressurized" or "activated" respectively "de-pressurized" or "de-activated" for opening respectively closing the valve (or for closing respectively opening that valve if the actuator is a normally closed actuator).

Seat valves, butterfly valves and membrane valves that are operated by an actuator generally have robust constructions and once the actuator has been activated or de-activated it may be assumed that the valve indeed is open respectively closed (or closed respectively open for a normally open actuator). However, the valves may in some instances not operate properly, for example if there is a break in a fluid line that supplies the pressure to the actuator. To handle this situation control units have been developed for estimating or verifying whether the valve is open or closed. However, these control units are relatively complex and thus quite expensive.

### Summary

It is an object of the invention to improve the above techniques and the prior art. In particular, it is an object to provide a control unit that in a simple and reliable manner is capable of estimating whether an actuator is activated or de-activated.

To solve these objects a control unit for a valve actuator is provided. The control unit comprises i) a fluid line that is connectable to a pressure chamber of the valve actuator, ii) a control valve configured to open and close the fluid line for activating the actuator when the control valve is in an activation mode and for de-activating the actuator when the control valve is in a de-activation mode, iii) a pressure sensor configured to read a pressure in the fluid line, and iv) a processing unit that is connected to the control valve and to the pressure sensor, the processing unit configured to set the control valve in the activation mode by sending an activation signal to the control valve and to set the control valve in the de-activation mode by sending a de-activation signal to the control valve, and to monitor a pressure obtained by the pressure sensor. The processing unit is configured to, when the control valve is in the activation mode: initiate, if the pressure is above a first pressure value that is representative of activation of the valve actuator, a signal that is indicative of successful activation of the actuator, and initiate, if the pressure is equal to or below the first pressure value, a signal that is indicative of unsuccessful activation of the actuator.

Typically, the activation mode of the control valve represents a state when the control valve is open such that a pressure may be supplied from a pressure source that is connected to the fluid line, through the fluid line, and to the pressure chamber of the actuator. When the control valve is in the de-activation mode the control valve is closed such that no pressure is supplied to the pressure chamber of the actuator. However, in some embodiments it may be the other way around, depending on how the control valve and the fluid line is configured, i.e. the activation mode of the control valve may represent a state when the control valve is closed while the de-activation mode represents a state when the control valve is opened. In any case, when the control valve is in the activation mode then the actuator is activated (or pressurized), and when the control valve is in the de-activation mode the actuator is de-activated (or de-pressurized).

The control unit is advantageous in that it, when the signal that is indicative of successful activation of the actuator is initiated, provides a reliable indication that the actuator is activated. Correspondingly, the control unit provides, when the signal that is indicative of unsuccessful activation of the actuator is initiated, a reliable indication of a failure to activate the actuator. The indication of an activated actuator or a failure to activate an actuator is accomplished in a very cost-efficient manner since the control unit requires very few and relatively simple components. The control unit may be used for both normally open actuators and normally closed actuators.

The processing unit may be configured to, when the control valve is in the de-activation mode: initiate, if the pressure is below a second pressure value that is representative of de-activation of the valve actuator, a signal that is indicative of successful de-activation of the actuator, and initiate, if the pressure is equal to or above the second pressure value, a signal that is indicative of unsuccessful de-activation of the actuator.

This makes the control unit advantageous in that it, when the signal that is indicative of successful de-activation of the actuator is initiated, provides a reliable indication of a de-activated actuator. Correspondingly, the control unit provides, when the signal that is indicative of unsuccessful de-activation of the actuator is initiated, a reliable indication of failure de-activate the actuator.

The processing unit may be configured to, when the control valve is in the activation mode: initiate, if the pressure is equal to or below the first pressure value after a predetermined period of time, e.g. from setting the control valve in the activation mode, the signal that is indicative of unsuccessful activation of the actuator.

The processing unit may be configured to, when the control valve is in the de-activation mode: initiate, if the pressure is equal to or above the second pressure value after a second, predetermined period of time, e.g. from setting the control valve in the de-activation mode, the signal that is indicative of unsuccessful de-activation of the actuator.

The processing unit may be configured to: determine a time that passes from setting the control valve in the activation mode until the pressure is above the first pressure value that is representative of activation of the valve actuator. This is advantageous since it facilitates detection of insufficient air pressure in e.g. the fluid line and/or detection of a leak in the actuator.

The processing unit may be configured to: determine a time that passes from setting the control valve in the de-activation mode until the pressure is below the second pressure value that is representative of de-activation of the valve actuator. This provides a possibility to detect if the actuator, for any reason, is unable to ventilate due to e.g. a blocked exhaust port of due to malfunction of the control valve.

The processing unit may be configured to: determine a rate by which the pressure obtained by the pressure sensor changes, and initiate a signal if the rate deviates from a predetermined rate interval. This provides a possibility to determine if the actuator is stuck, in which case a change in rate of pressure will be very high (an internal volume of the actuator will remain small and the pressure will therefore change with too high rate). Too slow change of pressure may indicate that the air flow is restricted.

The processing unit may be configured to, if a signal that is indicative of unsuccessful activation of the actuator was initiated: initiate, once the pressure is above a first pressure value that is representative of activation of the valve actuator, a signal that is indicative of successful activation of the actuator. The processing unit may, in a corresponding manner, be configured to, if a signal that is indicative of unsuccessful de-activation of the actuator was initiated: initiate, once the pressure is below a second pressure value that is representative of de-activation of the valve actuator, a signal that is indicative of successful deactivation of the actuator.

These features are advantageous in that the control unit may "reset" an indication of failure to activate or failure to de-activate the actuator.

The control unit may comprise a memory unit on which the first pressure value that is representative of activation of the valve actuator is stored. The second pressure value that is representative of de-activation of the valve actuator may also be stored on the memory unit. The control unit may comprise a printed circuit board that is arranged inside the control unit and comprises the pressure sensor, the processing unit and the memory unit. These features provide, alone or in combination, a reliable, cost efficient control unit that may operate more independently of e.g. a main control unit of a larger system that the actuator is part of.

The fluid line may comprise a fluid inlet, a fluid outlet and a vent opening, while the control valve is configured to open respectively close the fluid line by: providing fluid communication from the fluid inlet to the fluid outlet, while blocking fluid communication through the vent opening, respectively providing fluid communication from the fluid outlet to the vent opening, while blocking fluid communication through fluid inlet. The fluid line may in one embodiment comprise a sensor interface to which the pressure sensor is mounted. Each of these features provides a more simple and reliable control unit for estimating whether an actuator is activated or not.

The control unit may comprise a casing in which the fluid line, the control valve, the pressure sensor and the processing unit are arranged, the casing being attachable to the actuator. The casing may comprise a central, hollow space that is configured to receive an actuator rod of the actuator when the actuator is activated. A casing that implements one or more of these features provides, just like the other features of the control unit, a more simple and reliable control unit for estimating whether an actuator is activated or not

According to another aspect a valve arrangement is provided, which comprises a control unit that implements any of the features previously described, an actuator to which the control unit is attached for controlling the actuator, and a valve to which the actuator is attached for operating the valve.

According to another aspect a method for a control unit is provided, the control unit comprising a fluid line that is connectable to a pressure chamber of a valve actuator, a control valve configured to open and close the fluid line for activating the actuator when the control valve is in an activation mode and for de-activating the actuator when the control valve is in a de-activation mode, a pressure sensor configured to read a pressure in the fluid line, and a processing unit that is connected to the control valve and to the pressure sensor, the processing unit configured to set the control valve in the activation mode by sending an activation signal to the control valve and to set the control valve in the de-activation mode by sending a de-activation signal to the control valve, and to monitor a pressure obtained by the pressure sensor. The method comprises the steps of, when the control valve is in the activation mode: initiating, if the pressure is above a first pressure value that is representative of activation of the valve actuator, a signal that is indicative of successful activation of the actuator, and initiating, if the pressure is equal to or below the first pressure value, a signal that is indicative of unsuccessful activation of the actuator.

The method may implement any of the features of the control unit previously described. Still other objectives, features, aspects and advantages of the control unit, the valve arrangement and method will appear from the following detailed description as well as from the drawings.

### Brief Description of the Drawings

Embodiments of the invention will now be described, by way of example, with reference to the accompanying schematic drawings, in which
Fig. 1 is a cross-sectional view of a valve arrangement that includes a control unit, an actuator and a valve, when the actuator is de-activated,
Fig. 2 is a cross-sectional view of the valve arrangement of Fig. 1, when the actuator is activated,
Fig. 3 is a perspective view of the control unit of Fig. 1,
Fig. 4 is a top view of the control unit of Fig. 1,
Fig. 5 is a cross-sectional view of the control unit of Fig. 1, as seen along line A-A in Fig. 4, and a schematic main control unit that is connected to the control unit,
Fig. 6 is a cross-sectional view of the control unit of Fig. 1, as seen along line B-B in Fig. 5,
Figs 7 and 8 are cross-sectional views of the control unit of Fig. 1, as seen along lines C-C respectively D-D in Fig. 4,
Fig. 9 illustrates a processing unit of the control unit of Fig. 1,
Fig. 10 is a flow chart of a method performed by the control unit of Fig. 1,
Fig. 11 illustrates additional method steps that may be performed by the control unit of Fig. 1, and
Fig 12 is a block diagram of a device that implements the method of Fig. 10.

### Detailed description

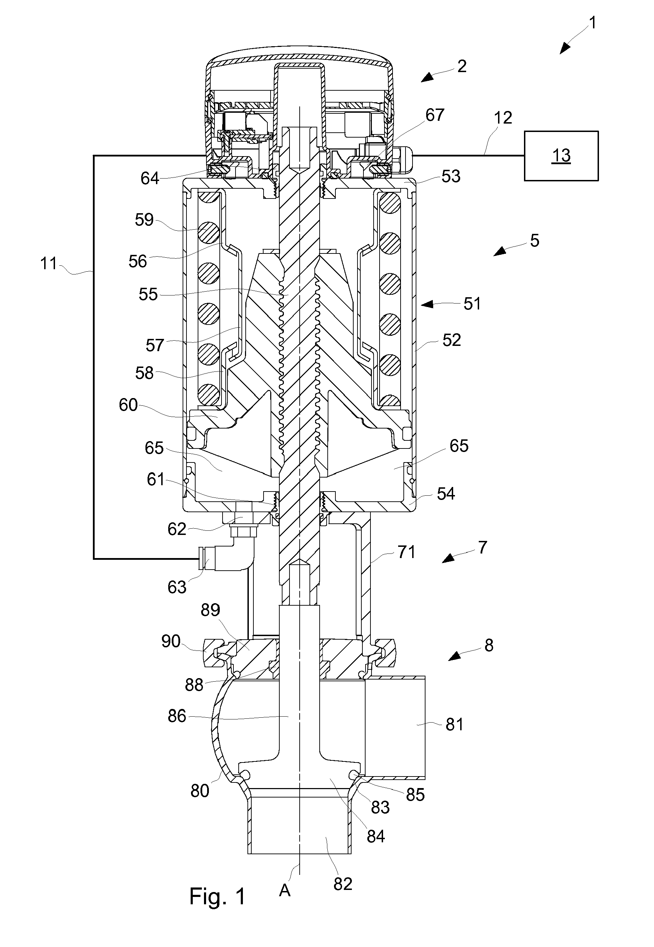

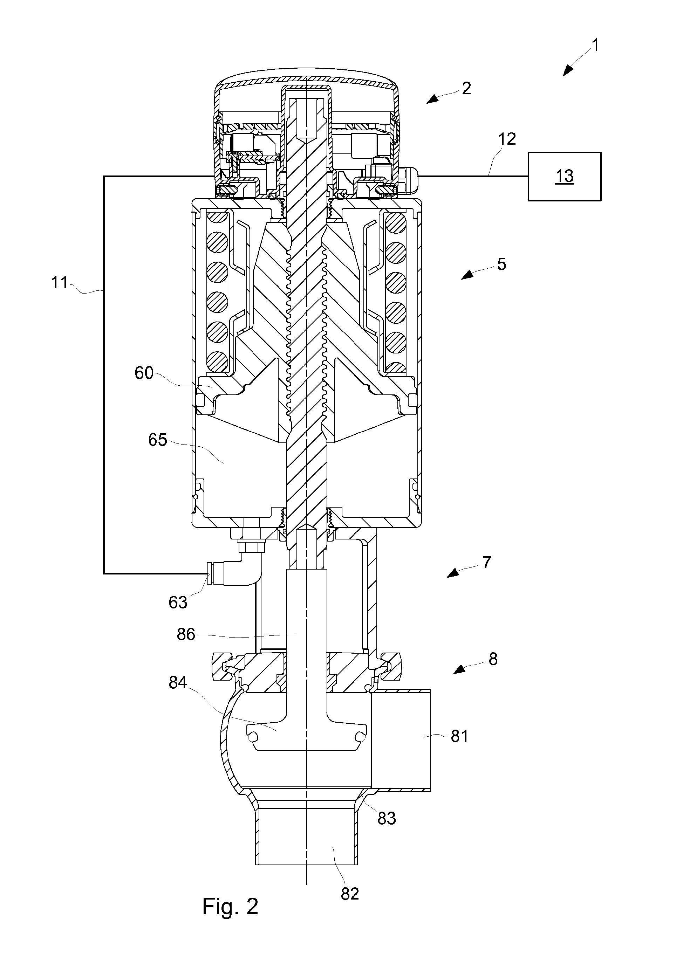

With reference to Figs 1 and 2 a valve arrangement 1 is illustrated. The valve arrangement 1 comprises an actuator 5, a control unit 2 and a valve 8 in form of a seat valve. In the illustrated embodiment the actuator is an air operated actuator. The control unit 2 is attached at an upper part of the actuator 5 by a connector arrangement 67 that is engaged by attachment screws of the control unit 2. The valve 8 is attached to a lower part of the actuator 5 via a connection element 7.

The valve 8 is a conventional seat valve and comprises a valve housing 80 that has an inlet opening 81 and an outlet opening 82. The valve housing 80 has a valve bonnet 89 with a passage for a valve stem 86 that extends into the valve housing 80. A bushing and seal 88 for the valve stem 86 is arranged in the passage for supporting the valve stem 86 and for accomplishing a seal between the valve stem 86 and the valve bonnet 89. The bushing and the seal 88 are fixed to the valve bonnet 89 in the passage for the valve stem 86.

The valve stem 86 has at a lower part a valve disc 84 and is movable in a direction towards and from a valve seat 83 that is located at the outlet opening 82, along a direction that is parallel to a geometrical center axis A of the valve stem 86. When the valve disc 84 abuts the valve seat 83, i.e. when the valve disc 84 is brought into contact with the valve seat 83, then the valve 8 is closed (see Fig. 1). When the valve stem 86 moves in a direction from the valve seat 83 the valve 8 is opened such that a liquid may flow from the inlet opening 81 to the outlet opening 82 (see Fig. 2). Thus, the valve seat 83 is arranged such that a liquid may flow from the inlet opening 81, past the valve seat 83 and to the outlet opening 82, which is a common arrangement for seat valves. A gasket 85 is arranged at a periphery of the valve disc 84, at a section of the valve disc 84 that is in contact with the valve seat 83 when the valve stem 86 is in a position closest to the valve seat 83 (i.e. when the valve housing 80 is closed).

The actuator 5 comprises a cylinder housing 51 that are formed by a cylindrical shell 52 and an upper cover 53 and lower cover 54 that seal the cylindrical shell 52. An actuator rod 55 extends through an opening in the upper cover 53, through the shell 52 and through an opening in the lower cover 54. The actuator rod 55 is movable back and forth along the same geometrical center axis A as the valve stem 86 is moveable along. A first seal arrangement 64 provides a fluid tight seal between the actuator rod 55 and the upper cover 53 while a second seal arrangement 61 provides a fluid tight seal between the actuator rod 55 and the lower cover 54.

The actuator 5 has a connection element 7 to which the valve 8 in a conventional manner is connected, for example by a connection ring 90. The connection element 7 comprises a cylindrical, hollow body 71 that surrounds an upper part of the valve stem 86 that protrudes out through the valve bonnet 89. The hollow body also surrounds a lower part of the actuator rod 55 that protrudes out through the opening in the lower cover 54. The upper part of the valve stem 86 is connected to the lower part of the actuator rod 55. The actuator rod 55 and the valve stem 86 shares the same geometrical center axis A and are movable in unison in a direction back and forth along the axis A. Thus, when the actuator rod 55 is moved in a direction towards or away from the valve seat 83, the valve disk 84 is moved towards or away from the valve seat 83 as well.

Inside the cylinder housing 51 a cylinder 60 is attached to the actuator rod 55. A seal is arranged at a periphery of the cylinder 60 and abuts the cylindrical shell 52, which creates a cylinder chamber 65 at a side of the cylinder 60 that faces the lower cover 54. At an opposite side of the cylinder, i.e. on a side of the cylinder 60 that faces the upper cover 53, a pre-compressed spring 59 is arranged with one spring end acting on the upper cover 53 and the opposite spring end acting on the side of the cylinder 60 that faces the upper cover 53. Since the spring 59 is pre-compressed it exerts a force on the piston 60 such that it is moved to a lowermost position. As may be seen from Fig. 1, the lowermost position is the position the piston 60 has when the valve disc 84 abuts the valve seat 83. The illustrated actuator 5 is a so called "normally closed" valve. Thus, a force applied by the spring 59 acts so as to close the valve 8.

In the illustrated embodiment the spring 59 is not directly abutting the upper cover 53 and the piston 60, even if this is possible. Instead the spring acts on the upper cover 53 and on the piston 60 via a spring cage 56, 57, 58.

The lower cover 54 has a fluid inlet 62 that allows fluid (typically air) to enter the cylinder chamber 65. The fluid is transferred from the control unit 2 via a fluid transfer line 11 that is connected to a fluid outlet of the control unit 2 and to an inlet connection 63 of the fluid inlet 62 of the lower cover 54. The fluid that is transferred to the control unit 2 comes from a pressure source 13 that is connected via supply line 12 to a fluid inlet of the control unit 2.

When the control unit 2 provides, as will be described later, fluid communication between the pressure source 13 and the cylinder chamber 65 the pressure in the cylinder chamber 65 rises. The pressure obtained from the pressure source 13 then exerts a pressure on the actuator piston 60. This generates a force on the actuator piston 60 that counteracts the force exerted by the spring 59. The pressure is selected such that the force generated by the pressure overcomes the force exerted by the spring 59, which opens the valve 8 by driving the piston 60, and hence also the valve disc 84, in an upward direction. The valve 8 remains open as long as the pressure is sufficiently high to generate a force that counteracts the force applied by the spring 59. In this state the valve 8 is open and the actuator 5 is "pressurized" or "activated" (see Fig. 2). When the control unit 2, as will be described later, prevents fluid communication with the pressure source 13 and allows fluid in the cylinder chamber 65 to exit the cylinder chamber cylinder chamber 65 via the fluid transfer line 11 and a vent opening in the control unit 2, then the force exerted by the pressure is reduced and the force exerted by the spring 59 eventually overcomes the force exerted by the pressure in the cylinder chamber 65, which closes the valve 8. In this state the valve 8 is closed and the actuator 5 is "de-pressurized" or "de-activated" (see Fig. 1). The fluid supplied by the pressure source 13 is typically air. The actuator 5 is thus an air operated actuator, which means that air is introduced into the actuator 5 for activating it while air is allowed to escape the actuator 5 for de-activating it.

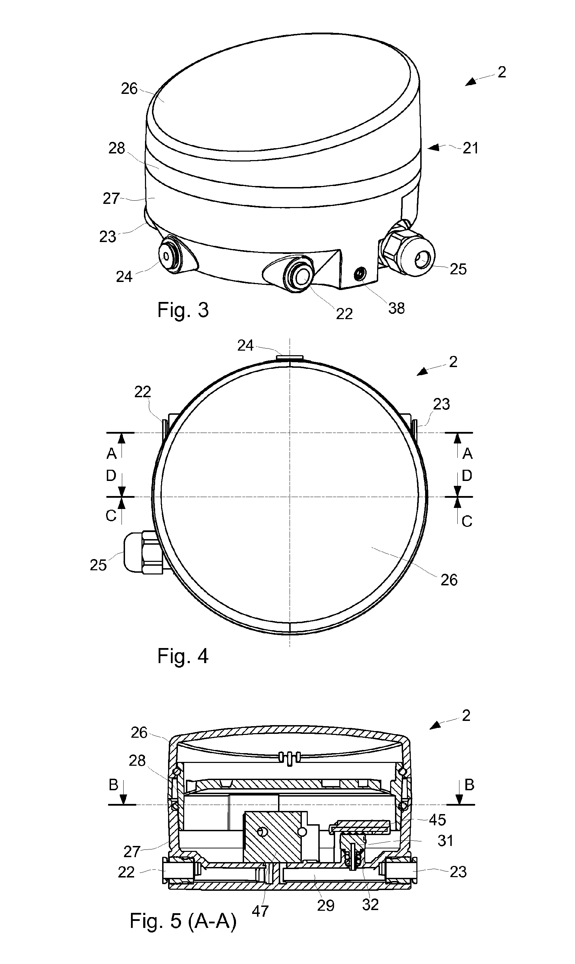

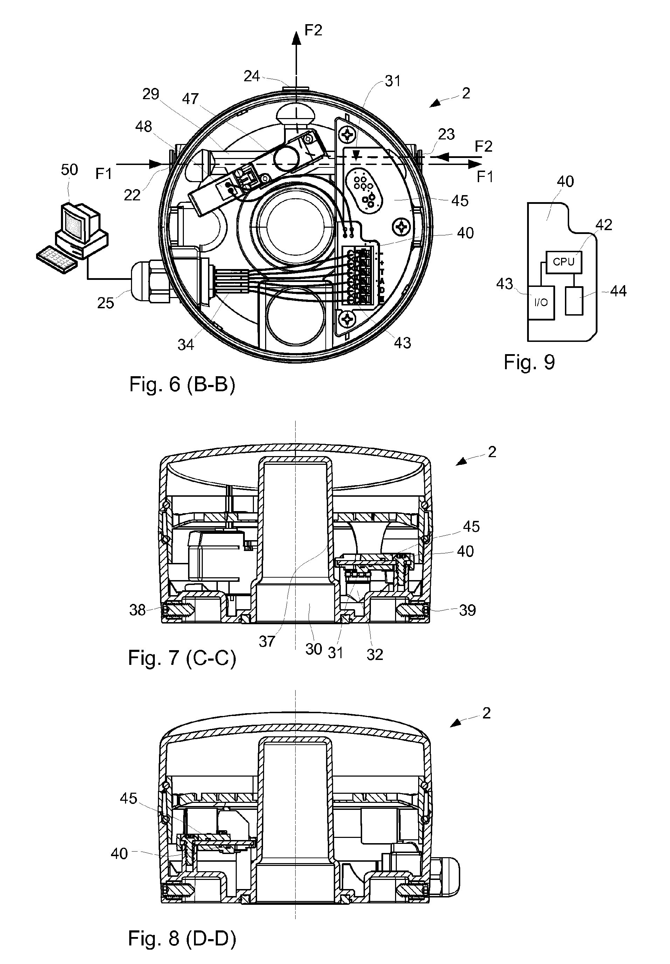

With reference to Figs 3 and 4 the control unit 2 is illustrated in greater detail. The control unit 2 comprises a casing 21 with a lower section 27 that has the fluid inlet 22, the fluid outlet 23 and the vent opening 24 previously mentioned. The vent opening 24 is implemented for letting out fluid into the surrounding atmosphere when the actuator 5 is de-activated. The casing 21 has also attachment screws 38, 39 (see also Fig. 7) that engage the connector arrangement 67 of the actuator 5, and a cable gland 25 for receiving an electrical cable that feeds electrical power to the control unit 2 and for allowing the control unit 2 to send and receive signals to and from a main control unit 50 (see Fig. 6) of a larger system the valve arrangement 1 is part of. In detail, the casing 21 has an intermediate section 28 and an upper section 26 that together with the lower section 27 form the casing 21.

With reference to Figs 5 and 6 the control unit 2 comprises a fluid line 29 that, via the fluid outlet 23 and the fluid transfer line 11, is connected the pressure chamber 65 of the valve actuator 5. A control valve 47 is arranged in the fluid line 29. The control valve 47 may be set in a so called "activation mode" for activating the actuator 5 by providing fluid communication F1 from the fluid inlet 22 to the fluid outlet 23, while blocking fluid communication through the vent opening 24. It may be said that the control valve 47 is "open" when it is in the activation mode.

The control valve 47 may also be set in a so called "de-activation mode" for de-activating the actuator 5 by providing fluid communication F2 from the fluid outlet 23 to the vent opening 24, while blocking fluid communication through the fluid inlet 22. It may be said that the control valve 47 is "closed" when it is in the de-activation mode. Thus, the control valve 47 is configured to open and close the fluid line 29 for activating the actuator 5 when the control valve 47 is in an activation mode and for de-activating the actuator 5 when the control valve 47 is in a de-activation mode. Any conventional valve technique may be used for providing the per se described fluid communications F1 and F2. The control valve 47 may, for example, be a solenoid valve.

The control valve 47 is set in the activation mode when it receives an activation signal (Sact) from a processing unit 40 of the control unit 2 and is set in the de-activation mode when it receives a de-activation signal (Sdeact) from the processing unit 40.

With further reference to Figs 7 and 8, the control unit 2 comprises a pressure sensor 31 that is configured to read a pressure in the fluid line 29. The fluid line 29 has a sensor interface 32 to which the pressure sensor 31 is mounted. The sensor interface 32 is arranged downstream the control valve 47, as seen in a direction from the fluid inlet 22 to the fluid outlet 23. Thus, the pressure sensor 31 is located between the control valve 47 and the fluid outlet 23. The pressure sensor 31 is arranged on a printed circuit board 45 and is mounted to the sensor interface 32 by attaching the printed circuit board 45 to the lower section 27 of the casing 21. A seal is arranged between the pressure sensor 31 and the sensor interface 32 for providing a fluid tight sealing. The pressure sensor 31 may be based on any suitable sensor technology capable of sensing a pressure in the fluid line 29.

In detail and with further reference to Fig 9, the printed circuit board 45 also comprises the processing unit 40 and a memory unit 44. The processing unit 40 has a central processing unit 42 (CPU), the memory unit 44 and an electronic input/output interface 43 (I/O). The processing unit 40 is via its interface 43 connected to a connector 48 of the control valve 47 and to wires of a cable 34 that provides electrical power and communication with the main control unit 50. The processing unit 40 is via conventional connectors (not shown) in the printed circuit board 45 connected to the pressure sensor 31.

The processing unit 40 may set the control valve 47 in the activation mode by sending an activation signal (Sact) to the control valve 47 and may set the control valve 47 in the de-activation mode by sending a de-activation signal (Sdeact) to the control valve 47. The processing unit 40 may also, intermittently or continuously, monitor a pressure (P) obtained or read by the pressure sensor 31.

The fluid line 29, the control valve 47, the pressure sensor 31 and the processing unit 40 are each arranged in the casing 21. The casing 21 has also a central, cylindrical, inner wall 37 that forms a hollow space 30 that receives the actuator rod 55 when the actuator 5 is activated, i.e. when the valve 8 is opened. Thus, the actuator rod 55 extends out from the upper cover 53, at least when the actuator 5 is activated.

Turning back to the processing unit 40, the central processing unit 42 is connected to and controls the electronic input/output interface 43 and stores data on respectively reads data from the memory unit 44. The CPU 42 is a central processing unit or microprocessor of a conventional type and represents the portion of the processing unit 40 that is capable of carrying out instructions of a computer program which is stored in e.g. the memory unit 44. The CPU 42 is the primary element carrying out or initiating the functions of the processing unit 40. The cable 34 allows an operator to input operation parameters (like "activate and "de-activate the actuator) and various values to be used by the CPU 42. Such values are typically predetermined values. The input/output interface 43 allows the control unit 2 to output information about the activation and de-activation of the actuator 5, which essentially corresponds to outputting information about the valve status (open or closed for a normally closed actuator and closed or open for a normally close actuator).

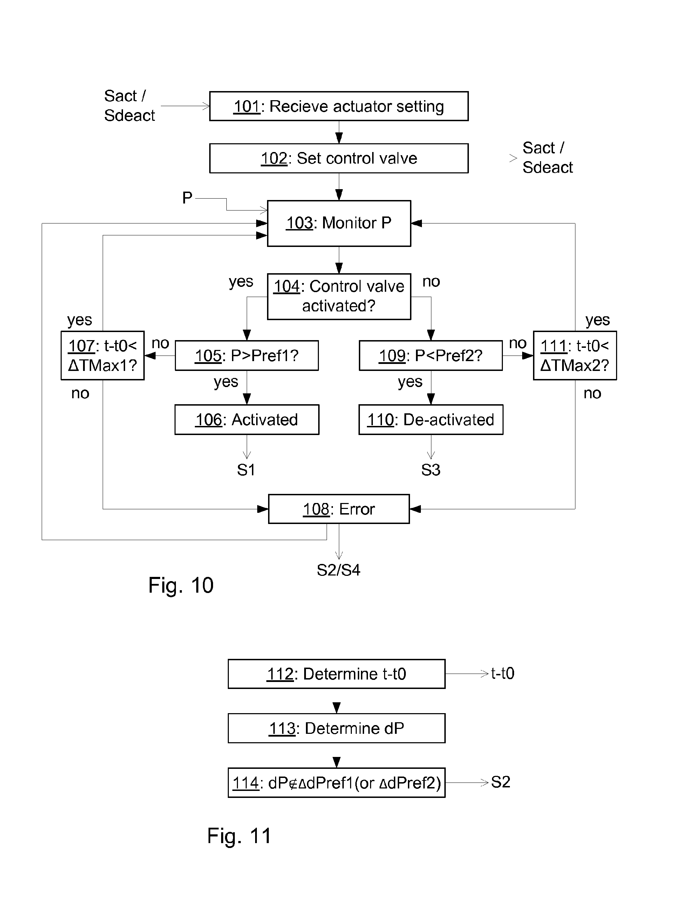

With reference to Fig. 10 a flow chart of a method performed by the control unit 2 is illustrated. The method revolves around initiating signals that are indicative of successful activation of the actuator 5, successful de-activation of the actuator 5, unsuccessful activation of the actuator 5 and unsuccessful de-activation of the actuator 5. The method is typically automated and operates by repeatedly executing a sequence of steps 101-111. In illustrated example the method may be implemented by the control unit 2, or more specifically, by the processing unit 40, i.e. the processing unit 40 is configured to perform the steps 101-111. This means that the control unit 2 also is, since it comprises the processing unit 40, configured to perform the steps 101-111.

The method is exemplified on the valve arrangement 1 of Fig. 1 and is described by first looking on step 101 where an activation signal Sact or a de-activation signal Sdeact is received. Typically, the control unit 2, and more specifically the processing unit 40, receives the signal Sact or Sdeact from the main control unit 50. The main control unit 50 is typically a conventional system control unit that is conventionally applied for controlling a number of valve arrangements. When the activation signal Sact is received the actuator 5 should be activated. When the de-activation signal Sdeact is received the actuator 5 should be de-activated.

In a next step 102 the activation signal Sact or de-activation signal Sdeact is, either sampled or un-sampled, transferred to the control valve 47 which is set in the activation mode when it receives the activation signal Sact and in the de-activation mode when it receives the de-activation signal Sdeact.

In a next step 103 the pressure P is obtained from the pressure sensor pressure sensor 31, as read in the fluid line 29.

In a next step 104 different subsequent steps 105-107 or 109-111 are entered depending in whether the control valve 47 is activated or not. In other words, steps 105-107 are performed if the activation signal Sact is received (in step 101), while steps 109-111 are performed if the de-activation signal is received (in step 101).

In step 105 the pressure P is compared with a first pressure value Pref1 that is representative of activation of the valve actuator 5. The first pressure value Pref1 is typically a predetermined pressure that is known to activate the actuator 5, and may be empirically established, for example by investigating at which pressure level the actuator 5 activates and by adding a safety margin. The first pressure value Pref1 is typically a predetermined value that is stored in the memory unit 44. Generally, the pressure in the cylinder chamber 65 is same as or very close to the pressure P read by the pressure sensor 31 in the fluid line 29. If the pressure P is above the first pressure value Pref1 then step 106 is entered, otherwise step 107 is entered.

In step 106 a signal S1 that is indicative of successful activation of the actuator 5 is initiated. The signal S1 may be any kind of visual or audial signal or any other suitable kind of signal, such as a signal that transfers a message to the main control unit 50.

In step 107 it is determined how much time t-t0 has passed since either step 101 or step 102 was entered. Here, t represents the current time while t0 represent the time at which step 101 or step 102 was entered. For the purpose of this determination the processing unit 40 comprises a conventional timing module. If the time t-t0 is smaller than a predetermined period of time ΔTmax1, then step 103 is re-entered, if not step 108 is entered. The predetermined period of time ΔTmax1 is typically an empirically established, predetermined value that is stored in the memory unit 44, and assures that the actuator 5 is given a predetermined time for entering the activation mode, before it is signaled that activation of the actuator failed (see step 108). It is possible to omit step 107 or to employ some other time delay.

Step 108 is thus entered if the pressure P is equal to or below the first pressure value Pref1 after a predetermined period of time ΔTmax1 has passed from setting the control valve 47 in the activation mode. In this step a signal S2 that is indicative of unsuccessful activation of the actuator 5 is initiated. The signal S2 may be any kind of visual or audial signal or any other suitable kind of signal, such as a signal that transfers a message to the main control unit 50. After step 108 step 103 is re- entered, which enables the control unit 2 to "reset" the signal by, if proper conditions are met in step 105, entering step 106.

As indicated, if the actuator 5 is to be de-activated step 109 is entered where the pressure P is compared with a second pressure value Pref2 that is representative of de-activation of the valve actuator 5. The second pressure value Pref2 is typically a predetermined pressure that is known to de-activate the actuator 5, and may be empirically established, for example by investigating at which pressure level the actuator de-activates and by subtracting a safety margin. The second pressure value Pref2 is typically a predetermined value that is stored in the memory unit 44. If the pressure P is below the second pressure value Pref2 then step 110 is entered, otherwise step 111 is entered.

In step 110 a signal S3 that is indicative of successful de-activation of the actuator 5 is initiated. The signal S3 may be any kind of visual or audial signal or any other suitable kind of signal, such as a signal that transfers a message to the main control unit 50. The signal S3 may be the same kind of signal as S1, in which case step 110 may be the same step as step 106. In this context a main control unit only needs a success signal to establish whether activation or de-activation succeeded, since the unit knows if a Sact or Sdeact signal was sent to the control unit 2.

In step 111 it is determined how much time t-t0 has passed since either step 101 or step 102 was entered. As before, t represents the current time while t0 represent the time at which step 101 or step 102 was entered. If the time t-t0 is smaller than a (second) predetermined period of time ΔTmax2, then step 103 is re-entered, if not step 108 is entered. The second predetermined period of time ΔTmax2 is typically an empirically established, predetermined value that is stored in the memory unit 44, and assures that the actuator 5 is given a predetermined time for entering the de-activation mode, before it is signaled that de-activation of the actuator failed (see step 108). It is possible to omit step 111 or to employ some other time delay.

If step 108 is entered from step 111 then a signal S4 that is indicative of unsuccessful de-activation of the actuator 5 is initiated. This signal S4 may be same or different from the signal S2 initiated when step 108 is entered from step 107. In this context a main control unit only needs a failure signal to establish whether activation or de-activation failed, since the unit knows if a Sact or Sdeact signal was sent to the control unit 2.

After signal S1 or S3 is generated in step 106 or 110, step 103 is typically re-entered which provides a continuous monitoring of the actuator 5. Step 101 is re-entered once a new activation signal Sact or de-activation signal Sdeact is received.

With reference to Fig. 11 one or more of additional steps 112-114 may be performed. Specifically, in step 112 a time t-t0 that passes from setting the control valve 47 in the activation mode until the pressure P is above Pref1 is determined. This step may be independent from or integral with step 107 or 111.

In step 113 a rate dP by which the pressure P obtained by the pressure sensor 31 changes is determined. In a next step 114 a signal is initiated if the rate dP deviates from a predetermined rate interval ΔdPref1 or ΔdPref2 (ΔdPref1 if the control valve is activated in step 104, ΔdPref2 if not). In step 114 the initiated signal may be a signal like S2 or S4, or any other type of suitable signal. Monitoring the rate dP by which the pressure P obtained by the pressure sensor 31 changes is advantageous in that faults related to problems with the actuator, the pressure source or the fluid lines leading to the actuator may be detected.

Generally, the method according to the various embodiments disclosed herein may be implemented by a data processing device, such as the processing unit 40, which is connected to the control valve 47 for controlling it by sending activation and de-activation signals (Sact and Sdeact). The processing unit 40 is also connected to the pressure sensor 31 for acquiring pressure readings (P). In a preferred embodiment the processing unit 40 is not separate from the control unit 2, even though this is conceivable in other embodiments.

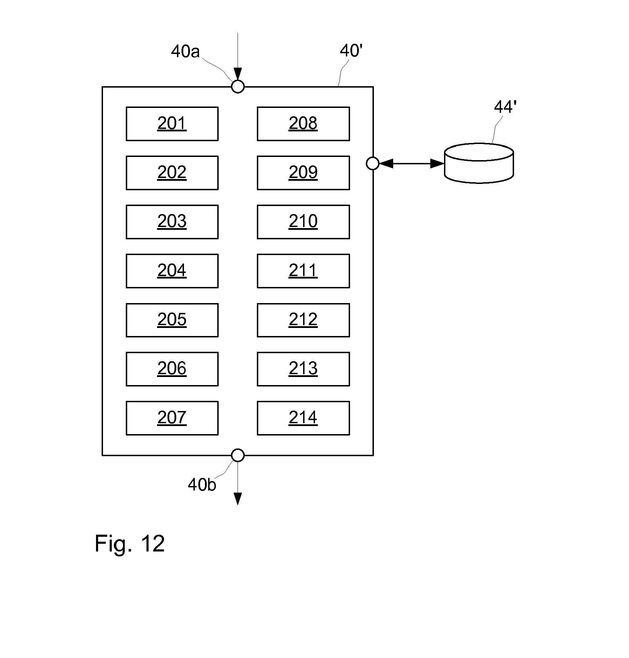

Fig. 12 shows an example of a data processing device 40' configured to implement the method of Fig. 10. The device 40' includes an input 40a for receiving the pressure signal P from the pressure sensor 31 and the activation signal Sact and the de-activation signal Sdeact from a main control unit 50. The device 40' further includes a setting module (or means) 201 for receiving actuator setting in step 101, a setting module (or means) 202 for setting the control valve in step 102, a monitoring module (or means) 203 for monitoring the pressure in step 103, a step selecting module (or means) 204 for selecting which subsequent steps to perform after step 104, a comparison module (or means) 205 for comparing P and Pref1 in step 105, a signal initiation module (or means) 206 for initiating the signal S1 in step 106, a comparison module (or means) 207 for comparing t-t0 with ΔTmax1 in step 107, a comparison module (or means) 209 for comparing P and Pref2 in step 109, a signal initiation module (or means) 210 for initiating the signal S3 in step 110, and a comparison module (or means) 211 for comparing t-t0 with ΔTmax2 in step 111. The device 40' may also have a module (or means) 212 for determining t-t0 in step 107, 111 or 112, a module (or means) 213 for determining dP in step 113 and a module (or means) 214 for comparing dP with ΔdPref1 and/or ΔdPref2 in step 114.

The device 40' may also have an output 40b for outputting activation signals Sact and de-activation signals Sdeact to the control valve 47, and signals S1, S2, S3, S4 that represent successful activation, successful de-activation, unsuccessful activation and unsuccessful de-activation of the actuator 5. As indicated in Fig. 12, the device 40' may be electrically connected to an electronic memory unit 44', e.g. for retrieval of the pressure values Pref1, Pref2, which typically are predetermined, the predetermined periods of time ΔTmax1, ΔTmax2 and the predetermined rate intervals ΔdPref1, ΔdPref2.

The device 40' may be implemented by special-purpose software (or firmware) run on one or more general-purpose or special-purpose computing devices. In this context, it is to be understood that each "module" or "means" of such a computing device refers to a conceptual equivalent of a method step; there is not always a one-to-one correspondence between elements/means and particular pieces of hardware or software routines. One piece of hardware sometimes comprises different modules/means. For example, a processing unit may serve as one module/means when executing one instruction, but serve as another module/means when executing another instruction. In addition, one module/means may be implemented by one instruction in some cases, but by a plurality of instructions in some other cases. Naturally, it is conceivable that one or more modules (means) are implemented entirely by analog hardware components.

The software controlled device 40' may include one or more processing units (cf. 42 in Fig. 9), e.g. a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gate Array"). The device 40' may further include a system memory and a system bus that couples various system components including the system memory to the processing unit. The system bus may be any of several types of bus structures including a memory bus or memory controller, a peripheral bus, and a local bus using any of a variety of bus architectures. The system memory may include computer storage media in the form of volatile and/or non-volatile memory such as read only memory (ROM), random access memory (RAM) and flash memory. The special-purpose software, the reference values, and any other data needed during execution, may be stored in the system memory, or on other removable/non-removable volatile/non-volatile computer storage media which is included in or accessible to the computing device, such as magnetic media, optical media, flash memory cards, digital tape, solid state RAM, solid state ROM, etc. The device processing unit 40' may include one or more communication interfaces, such as a serial interface, a parallel interface, a USB interface, a wireless interface, a network adapter, etc., as well as one or more data acquisition devices, such as an A/D converter. The special-purpose software may be provided to the device 40' on any suitable computer-readable medium, including a record medium, and a read-only memory. Typically, the device 40' may correspond to the processing unit 40.

It should be noted that the processing unit 40 is purposely configured to implement the steps described in connection with Figs 10 and 11, for example by having access to software instructions that implement the steps, and incorporates thus unique properties that distinguishes the processing unit 40 from other, prior art processing units.

From the description above follows that, although various embodiments of the invention have been described and shown, the invention is not restricted thereto, but may also be embodied in other ways within the scope of the subject-matter defined in the following claims. For example, the invention (the control unit control unit and the method) may be used for actuators that operates butterfly valves and membrane valves as well as operates any other type of valve that is activated by an actuator like the one described herein. Also, even if a so called "normally closed" actuator is illustrated, the invention may be applied for a so called "normally open" actuator. Thus, signaling "activation", "de-activation", "unsuccessful activation" and "unsuccessful de-activation" as done by the control unit described herein is performed in same ways for "normally closed" actuators as for "normally open" actuators. As is known, a normally closed actuator closes, by virtue of its spring, a valve when no pressure is applied to a cylinder chamber of the actuator while the valve is opened when the pressure is applied, i.e. when the actuator is activated. A normally open actuator opens, by virtue of its spring, a valve when no pressure is applied to a cylinder chamber of the actuator while the valve is closed when the pressure is applied, i.e. when the actuator is activated.

## Claims

1. A control unit for a valve actuator (5), comprising
a fluid line (29) that is connectable to a pressure chamber (65) of the valve actuator (5),
a control valve (47) configured to open and close the fluid line (29) for activating the actuator (5) when the control valve (47) is in an activation mode and for de-activating the actuator (5) when the control valve (47) is in a de-activation mode,
a pressure sensor (31) configured to read a pressure (P) in the fluid line (29), and
a processing unit (40) that is connected to the control valve (47) and to the pressure sensor (31), the processing unit (40) configured to set the control valve (47) in the activation mode by sending (102) an activation signal (Sact) to the control valve (47) and to set the control valve (47) in the de-activation mode by sending (102) a de-activation signal (Sdeact) to the control valve (47), and to monitor (103) a pressure (P) obtained by the pressure sensor (31), **characterised in that**
the processing unit (40) is configured to, when the control valve (47) is in the activation mode:
initiate (106), if the pressure (P) is above a first pressure value (Pref1) that is representative of activation of the valve actuator (5), a signal (S1) that is indicative of successful activation of the actuator (5), and
initiate (108), if the pressure (P) is equal to or below the first pressure value (Pref1), a signal (S2) that is indicative of unsuccessful activation of the actuator (5).

2. A control unit according to claim 1, wherein the processing unit (40) is configured to, when the control valve (47) is in the de-activation mode:
initiate (110), if the pressure (P) is below a second pressure value (Pref2) that is representative of de-activation of the valve actuator (5), a signal (S3) that is indicative of successful de-activation of the actuator (5), and
initiate (108), if the pressure (P) is equal to or above the second pressure value (Pref2), a signal (S4) that is indicative of unsuccessful de-activation of the actuator (5).

3. A control unit according to claim 1 or 2, wherein the processing unit (40) is configured to, when the control valve (47) is in the activation mode:
initiate (108), if the pressure (P) is equal to or below the first pressure value (Pref1) after a predetermined period of time (ΔTmax1) has passed, the signal (S2) that is indicative of unsuccessful activation of the actuator (5).

4. A control unit according to claim 2, wherein the processing unit (40) is configured to, when the control valve (47) is in the de-activation mode:
initiate (108), if the pressure (P) is equal to or above the second pressure value (Pref2) after a second, predetermined period of time (ΔTmax2) has passed, the signal (S4) that is indicative of unsuccessful de-activation of the actuator (5).

5. A control unit according to any claim 2, wherein the processing unit (40) is configured to:
determine (112) a time (t-t0) that passes from setting the control valve (47) in the de-activation mode until the pressure (P) is below the second pressure value (Pref2) that is representative of de-activation of the valve actuator (5).

6. A control unit according to any one of claims 1 - 5, wherein the processing unit (40) is configured to:
determine (113) a rate (dP) by which the pressure (P) obtained by the pressure sensor (31) changes, and
initiate (114) a signal (S2) if the rate (dP) deviates from a predetermined rate interval (ΔdPref1, ΔdPref2).

7. A control unit according to claim 1, wherein the processing unit (40) is configured to, if a signal (S2) that is indicative of unsuccessful activation of the actuator (5) was initiated:
initiate (106), once the pressure (P) is above a first pressure value (Pref1) that is representative of activation of the valve actuator (5), a signal (S1) that is indicative of successful activation of the actuator (5).

8. A control unit according to any one of claims 1 - 7, comprising a memory unit (44) on which the first pressure value (Pref1) that is representative of activation of the valve actuator (5) is stored.

9. A control unit according to claim 8, comprising a printed circuit board (45) that is arranged inside the control unit and comprises the pressure sensor (31), the processing unit (40) and the memory unit (44).

10. A control unit according to any one of claims 1 - 9, wherein the fluid line (29) comprises a fluid inlet (22), a fluid outlet (23), and a vent opening (24), the control valve (47) configured to open respectively close the fluid line (29) by:
providing fluid communication (F1) from the fluid inlet (22) to the fluid outlet (23), while blocking fluid communication through the vent opening (24), respectively
providing fluid communication (F2) from the fluid outlet (23) to the vent opening (24), while blocking fluid communication through fluid inlet (22).

11. A control unit according to any one of claims 1 - 10, wherein the fluid line (29) comprises a sensor interface (32) to which the pressure sensor (31) is mounted.

12. A control unit according to any one of claims 1 - 11, comprising a casing (21) in which the fluid line (29), the control valve (47), the pressure sensor (31) and the processing unit (40) are arranged, the casing (21) being attachable to the actuator (5).

13. A control unit according to claim 12, wherein the casing (21) comprises a central, hollow space (30) that is configured to receive an actuator rod (55) of the actuator (5) when the actuator (5) is activated.

14. A valve arrangement comprising a control unit (2) according to any one of claims 1 - 13, an actuator (5) to which the control unit (2) is attached for controlling the actuator (5), and a valve (8) to which the actuator (5) is attached for operating the valve (8).

15. A method for a control unit (2), the control unit (2) comprising a fluid line (29) that is connectable to a pressure chamber (65) of a valve actuator (5), a control valve (47) configured to open and close the fluid line (29) for activating the actuator (5) when the control valve (47) is in an activation mode and for de-activating the actuator (5) when the control valve (47) is in a de-activation mode, a pressure sensor (31) configured to read a pressure (P) in the fluid line (29), and a processing unit (40) that is connected to the control valve (47) and to the pressure sensor (31), the processing unit (40) configured to set the control valve (47) in the activation mode by sending (102) an activation signal (Sact) to the control valve (47) and to set the control valve (47) in the de-activation mode by sending (102) a de-activation signal (Sdeact) to the control valve (47), and to monitor (103) a pressure (P) obtained by the pressure sensor (31), the method comprising the steps of, when the control valve (47) is in the activation mode:
initiating (106), if the pressure (P) is above a first pressure value (Pref1) that is representative of activation of the valve actuator (5), a signal (S1) that is indicative of successful activation of the actuator (5), and
initiating (108), if the pressure (P) is equal to or below the first pressure value (Pref1), a signal (S2) that is indicative of unsuccessful activation of the actuator (5).

## Patentansprüche

1. Steuereinheit für einen Ventilstellantrieb (5), umfassend:
eine Fluidleitung (29), die mit einer Druckkammer (65) des Ventilstellantriebs (5) verbindbar ist,
ein Steuerventil (47), das dafür konfiguriert ist, die Fluidleitung (29) zu öffnen und zu schließen, und zwar zum Aktivieren des Stellantriebs (5), wenn das Steuerventil (47) in einem Aktivierungsmodus ist, und zum Deaktivieren des Stellantriebs (5), wenn das Steuerventil (47) in einem Deaktivierungsmodus ist,
einen Drucksensor (31), der dafür konfiguriert ist, einen Druck (P) in der Fluidleitung (29) zu lesen, und
eine Verarbeitungseinheit (40), die mit dem Steuerventil (47) und dem Drucksensor (31) verbunden ist, wobei die Verarbeitungseinheit (40) dafür konfiguriert ist, das Steuerventil (47) durch Senden (102) eines Aktivierungssignals (Sact) an das Steuerventil (47) in den Aktivierungsmodus zu versetzen und das Steuerventil (47) durch Senden (102) eines Deaktivierungssignals (Sdeact) an das Steuerventil (47) in den Deaktivierungsmodus zu versetzen und einen durch den Drucksensor (31) erlangten Druck (P) zu überwachen (103), **dadurch gekennzeichnet, dass**:
die Verarbeitungseinheit (40) dafür konfiguriert ist, wenn das Steuerventil (47) im Aktivierungsmodus ist:
wenn der Druck (P) oberhalb eines ersten Druckwerts (Pref1) ist, der die Aktivierung des Ventilstellantriebs (5) repräsentiert, ein Signal (S1) auszulösen (106), das die erfolgreiche Aktivierung des Stellantriebs (5) kennzeichnet, und
wenn der Druck (P) gleich dem oder unterhalb des ersten Druckwerts (Pref1) ist, ein Signal (S2) auszulösen (108), das die erfolglose Aktivierung des Stellantriebs (5) kennzeichnet.

2. Steuereinheit nach Anspruch 1, worin die Verarbeitungseinheit (40) dafür konfiguriert ist, wenn das Steuerventil (47) im Deaktivierungsmodus ist:
wenn der Druck (P) unterhalb eines zweiten Druckwerts (Pref2) ist, der die Deaktivierung des Ventilstellantriebs (5) repräsentiert, ein Signal (S3) auszulösen (110), das die erfolgreiche Deaktivierung des Stellantriebs (5) kennzeichnet, und
wenn der Druck (P) gleich dem oder oberhalb des zweiten Druckwerts (Pref2) ist, ein Signal (S4) auszulösen (108), das die erfolglose Deaktivierung des Stellantriebs (5) kennzeichnet.

3. Steuereinheit nach Anspruch 1 oder 2, worin die Verarbeitungseinheit (40) dafür konfiguriert ist, wenn das Steuerventil (47) im Aktivierungsmodus ist:
wenn der Druck (P), nachdem ein vorbestimmter Zeitraum (ΔTmax1) vergangen ist, gleich dem oder unterhalb des ersten Druckwerts (Pref1) ist, das Signal (S2) auszulösen (108), das die erfolglose Aktivierung des Stellantriebs (5) kennzeichnet.

4. Steuereinheit nach Anspruch 2, worin die Verarbeitungseinheit (40) dafür konfiguriert ist, wenn das Steuerventil (47) im Deaktivierungsmodus ist:
wenn der Druck (P), nachdem ein zweiter vorbestimmter Zeitraum (ΔTmax2) vergangen ist, gleich dem oder oberhalb des zweiten Druckwerts (Pref2) ist, das Signal (S4) auszulösen (108), das die erfolglose Deaktivierung des Stellantriebs (5) kennzeichnet.

5. Steuereinheit nach Anspruch 2, worin die Verarbeitungseinheit (40) dafür konfiguriert ist:
eine Zeit (t-t0) zu bestimmen (112), die seit dem Versetzen des Steuerventils (47) in den Deaktivierungsmodus vergeht, bis der Druck (P) unterhalb des zweiten Druckwerts (Pref2) ist, der die Deaktivierung des Ventilstellantriebs (5) repräsentiert.

6. Steuereinheit nach einem der Ansprüche 1 bis 5, worin die Verarbeitungseinheit (40) dafür konfiguriert ist:
eine Rate (dP) zu bestimmen (113), mit der sich der durch den Drucksensor (31) erlangte Druck (P) ändert, und
ein Signal (S2) auszulösen (114), wenn die Rate (dP) von einem vorbestimmten Ratenintervall (ΔdPref1, ΔdPref2) abweicht.

7. Steuereinheit nach Anspruch 1, worin die Verarbeitungseinheit (40) dafür konfiguriert ist, wenn ein Signal (S2) ausgelöst wurde, das die erfolglose Aktivierung des Stellantriebs (5) kennzeichnet:
sobald der Druck (P) oberhalb eines ersten Druckwerts (Pref1) ist, der die Aktivierung des Ventilstellantriebs (5) repräsentiert, ein Signal (S1) auszulösen (106), das die erfolgreiche Aktivierung des Stellantriebs (5) kennzeichnet.

8. Steuereinheit nach einem der Ansprüche 1 bis 7, eine Speichereinheit (44) umfassend, in welcher der erste Druckwert (Pref1), der die Aktivierung des Ventilstellantriebs (5) repräsentiert, gespeichert wird.

9. Steuereinheit nach Anspruch 8, eine Leiterplatte (45) umfassend, die innerhalb der Steuereinheit angeordnet ist und den Drucksensor (31), die Verarbeitungseinheit (40) und die Speichereinheit (44) umfasst.

10. Steuereinheit nach einem der Ansprüche 1 bis 9, worin die Fluidleitung (29) einen Fluideinlass (22), einen Fluidauslass (23) und eine Entlüftungsöffnung (24) umfasst, wobei das Steuerventil (47) dafür konfiguriert ist, die Fluidleitung (29) zu öffnen bzw. zu schließen, und zwar durch:
Bereitstellen von Fluidkommunikation (F1) vom Fluideinlass (22) zum Fluidauslass (23), während Fluidkommunikation durch die Entlüftungsöffnung (24) blockiert wird, beziehungsweise
Bereitstellen von Fluidkommunikation (F2) vom Fluidauslass (23) zur Entlüftungsöffnung (24), während Fluidkommunikation durch den Fluideinlass (22) blockiert wird.

11. Steuereinheit nach einem der Ansprüche 1 bis 10, worin die Fluidleitung (29) eine Sensorschnittstelle (32) umfasst, an welcher der Drucksensor (31) angebracht ist.

12. Steuereinheit nach einem der Ansprüche 1 bis 11, ein Gehäuse (21) umfassend, in dem die Fluidleitung (29), das Steuerventil (47), der Drucksensor (31) und die Verarbeitungseinheit (40) angeordnet sind, wobei das Gehäuse (21) am Stellantrieb (5) anbringbar ist.

13. Steuereinheit nach Anspruch 12, worin das Gehäuse (21) einen zentralen Hohlraum (30) umfasst, der dafür konfiguriert ist, eine Ventilstellantriebsstange (55) des Ventilstellantriebs (5) aufzunehmen, wenn der Ventilstellantrieb (5) aktiviert wird.

14. Ventilanordnung, umfassend eine Steuereinheit (2) nach einem der Ansprüche 1 bis 13, einen Stellantrieb (5), an dem die Steuereinheit (2) zum Steuern des Stellantriebs (5) angebracht ist, und ein Ventil (8), an dem der Stellantrieb (5) zum Betätigen des Ventils (8) angebracht ist.

15. Verfahren für eine Steuereinheit (2), wobei die Steuereinheit (2) umfasst: eine Fluidleitung (29), die mit einer Druckkammer (65) eines Ventilstellantriebs (5) verbindbar ist, ein Steuerventil (47), das dafür konfiguriert ist, die Fluidleitung (29) zu öffnen und zu schließen, und zwar zum Aktivieren des Stellantriebs (5), wenn das Steuerventil (47) in einem Aktivierungsmodus ist, und zum Deaktivieren des Stellantriebs (5), wenn das Steuerventil (47) in einem Deaktivierungsmodus ist, einen Drucksensor (31), der dafür konfiguriert ist, einen Druck (P) in der Fluidleitung (29) zu lesen, und eine Verarbeitungseinheit (40), die mit dem Steuerventil (47) und dem Drucksensor (31) verbunden ist, wobei die Verarbeitungseinheit (40) dafür konfiguriert ist, das Steuerventil (47) durch Senden (102) eines Aktivierungssignals (Sact) an das Steuerventil (47) in den Aktivierungsmodus zu versetzen und das Steuerventil (47) durch Senden (102) eines Deaktivierungssignals (Sdeact) an das Steuerventil (47) in den Deaktivierungsmodus zu versetzen und einen durch den Drucksensor (31) erlangten Druck (P) zu überwachen (103), wobei das Verfahren die Schritte umfasst, wenn das Steuerventil (47) im Aktivierungsmodus ist:
wenn der Druck (P) oberhalb eines ersten Druckwerts (Pref1) ist, der die Aktivierung des Ventilstellantriebs (5) repräsentiert, Auslösen (106) eines Signals (S1), das die erfolgreiche Aktivierung des Stellantriebs (5) kennzeichnet, und
wenn der Druck (P) gleich dem oder unterhalb des ersten Druckwerts (Pref1) ist, Auslösen (108) eines Signals (S2), das die erfolglose Aktivierung des Stellantriebs (5) kennzeichnet.

## Revendications

1. Unité de commande pour un actionneur de soupape (5), comprenant
une conduite de fluide (29) qui peut être reliée à une chambre de pression (65) de l'actionneur de soupape (5),
une soupape de commande (47) configurée pour ouvrir et fermer la conduite de fluide (29) afin d'activer l'actionneur (5) lorsque la soupape de commande (47) est dans un mode d'activation et afin de désactiver l'actionneur (5) lorsque la soupape de commande (47) est dans un mode de désactivation,
un capteur de pression (31) configuré pour lire une pression (P) dans la conduite de fluide (29), et
une unité de traitement (40) qui est reliée à la soupape de commande (47) et au capteur de pression (31), l'unité de traitement (40) étant configurée pour mettre la soupape de commande (47) en mode d'activation grâce à un envoi (102) d'un signal d'activation (Sact) vers la soupape de commande (47) et pour mettre la soupape de commande (47) en mode de désactivation grâce à l'envoi (102) d'un signal de désactivation (Sdeact) vers la soupape de commande (47), et pour surveiller (103) une pression (P) obtenue grâce au capteur de pression (31), **caractérisée en ce que**
l'unité de traitement (40) est configurée pour, lorsque la soupape de commande (47) est en mode d'activation :
déclencher (106), si la pression (P) est supérieure à une première valeur de pression (Pref1) qui est représentative d'une activation de l'actionneur de soupape (5), un signal (S1) qui est indicatif d'une activation réussie de l'actionneur (5), et
déclencher (108), si la pression (P) est inférieure ou égale à la première valeur de pression (Pref1), un signal (S2) qui est indicatif d'une activation non réussie de l'actionneur (5).

2. Unité de commande selon la revendication 1, dans lequel l'unité de traitement (40) est configurée pour, lorsque la soupape de commande (47) est en mode de désactivation :
déclencher (110), si la pression (P) est inférieure à une seconde valeur de pression (Pref2) qui est représentative d'une désactivation de l'actionneur de soupape (5), un signal (S3) qui est indicatif d'une désactivation réussie de l'actionneur (5), et
déclencher (108), si la pression (P) est supérieure ou égale à la seconde valeur de pression (Pref2), un signal (S4) qui est indicatif d'une désactivation non réussie de l'actionneur (5).

3. Unité de commande selon la revendication 1 ou 2, dans laquelle l'unité de traitement (40) est configurée pour, lorsque la soupape de commande (47) est en mode d'activation :
déclencher (108), si la pression (P) est inférieure ou égale à la première valeur de pression (Pref1) après qu'une période prédéterminée de temps (ΔTmax1) s'est écoulée, le signal (S2) qui est indicatif d'une activation non réussie de l'actionneur (5).

4. Unité de commande selon la revendication 2, dans laquelle l'unité de traitement (40) est configurée pour, lorsque la soupape de commande (47) est en mode de désactivation :
déclencher (108), si la pression (P) est supérieure ou égale à la seconde valeur de pression (Pref2) après qu'une seconde période prédéterminée de temps (ΔTmax2) s'est écoulée, le signal (S4) qui est indicatif d'une désactivation non réussie de l'actionneur (5).

5. Unité de commande selon la revendication 2, dans laquelle l'unité de traitement (40) est configurée pour :
déterminer (112) une durée (t - t0) allant de la mise en mode de désactivation de la soupape de commande (47) jusqu'au moment où la pression (P) est inférieure à la seconde valeur de pression (Pref2) représentative d'une désactivation de l'actionneur de soupape (5).

6. Unité de commande selon l'une quelconque des revendications 1 à 5, dans laquelle l'unité de traitement (40) est configurée pour :
déterminer (113) une vitesse (dP) avec laquelle la pression (P) obtenue grâce au capteur de pression (31) se modifie, et
déclencher (114) un signal (S2) si la vitesse (dP) s'écarte d'un intervalle de vitesse prédéterminé (ΔdPref1, ΔdPref2).

7. Unité de commande selon la revendication 1, dans laquelle l'unité de traitement (40) est configurée pour, si un signal (S2) qui est indicatif d'une activation non réussie de l'actionneur (5) a été déclenché :
déclencher (106), une fois que la pression (P) est supérieure à une première valeur de pression (Pref1) qui est représentative d'une activation de l'actionneur de soupape (5), un signal (S1) qui est indicatif d'une activation réussie de l'actionneur (5).

8. Unité de commande selon l'une quelconque des revendications 1 à 7, comprenant une unité de mémoire (44) sur laquelle est stockée la première valeur de pression (Pref1) qui est représentative d'une activation de l'actionneur de soupape (5).

9. Unité de commande selon la revendication 8, comprenant une carte de circuit imprimé (45) qui est agencée à l'intérieur de l'unité de commande et comprend le capteur de pression (31), l'unité de traitement (40) et l'unité de mémoire (44).

10. Unité de commande selon l'une quelconque des revendications 1 à 9, dans laquelle la conduite de fluide (29) comprend une entrée de fluide (22), une sortie de fluide (23), et une ouverture de mise à l'air (24), la soupape de commande (47) étant configurée pour ouvrir, respectivement fermer, la conduite de fluide (29) grâce aux étapes consistant à :
fournir une communication fluidique (F1) de l'entrée de fluide (22) vers la sortie de fluide (23), tout en bloquant une communication fluidique à travers l'ouverture de mise à l'air (24), respectivement
fournir une communication fluidique (F2) de la sortie de fluide (23) vers l'ouverture de mise à l'air (24), tout en bloquant une communication fluidique à travers l'entrée de fluide (22).

11. Unité de commande selon l'une quelconque des revendications 1 à 10, dans laquelle la conduite de fluide (29) comprend une interface de capteur (32) sur laquelle est monté le capteur de pression (31).

12. Unité de commande selon l'une quelconque des revendications 1 à 11, comprenant un boîtier (21) dans lequel sont agencés la conduite de fluide (29), la soupape de commande (47), le capteur de pression (31) et l'unité de traitement (40), le boîtier (21) pouvant être fixé à l'actionneur (5).

13. Unité de commande selon la revendication 12, dans laquelle le boîtier (21) comprend un espace central creux (30) qui est configuré pour recevoir une tringle d'actionneur (55) de l'actionneur (5) lorsque l'actionneur (5) est activé.

14. Agencement de soupape comprenant une unité de commande (2) selon l'une quelconque des revendications 1 à 13, un actionneur (5) auquel est fixée l'unité de commande (2) afin de commander l'actionneur (5), et une soupape (8) à laquelle est fixé l'actionneur (5) afin de faire fonctionner la soupape (8).

15. Procédé pour une unité de commande (2), l'unité de commande (2) comprenant une conduite de fluide (29) qui peut être reliée à une chambre de pression (65) d'un actionneur de soupape (5), une soupape de commande (47) étant configurée pour ouvrir et fermer la conduite de fluide (29) afin d'activer l'actionneur (5) lorsque la soupape de commande (47) est dans un mode d'activation et afin de désactiver l'actionneur (5) lorsque la soupape de commande (47) est dans un mode de désactivation, un capteur de pression (31) configuré pour lire une pression (P) dans la conduite de fluide (29), et une unité de traitement (40) qui est reliée à la soupape de commande (47) et au capteur de pression (31), l'unité de traitement (40) étant configurée pour mettre la soupape de commande (47) en mode d'activation grâce à l'envoi (102) d'un signal d'activation (Sact) vers la soupape de commande (47) et pour mettre la soupape de commande (47) en mode de désactivation grâce à l'envoi (102) d'un signal de désactivation (Sdeact) vers la soupape de commande (47), et pour surveiller (103) une pression (P) obtenue grâce au capteur de pression (31), le procédé comprenant les étapes consistant à, lorsque la soupape de commande (47) est en mode d'activation :
déclencher (106), si la pression (P) est supérieure à une première valeur de pression (Pref1) qui est représentative d'une activation de l'actionneur de soupape (5), un signal (S1) qui est indicatif d'une activation réussie de l'actionneur (5), et
déclencher (108), si la pression (P) est inférieure ou égale à la première valeur de pression (Pref1), un signal (S2) qui est indicatif d'une activation non réussie de l'actionneur (5).
